# EUROPÄISCHE PATENTANMELDUNG

(11) **EP 4 169 421 A1**
(43) Veröffentlichungstag der Anmeldung: **26.04.2023**
(21) Anmeldenummer: 21204472.1
(22) Anmeldetag: 25.10.2021
(51) Int. Cl.: A47J 31/40, A47J 43/07

(54) **VORRICHTUNG ZUR ZUBEREITUNG EINES MISCHGETRÄNKS UND VERFAHREN ZUR MONTAGE UND HERSTELLUNG DER VORRICHTUNG**

(71) Anmelder: Bodyshake GmbH, 08064 Zwickau (DE)
(72) Erfinder: RATZOW, Daniel, 08412 Werdau (DE); HACHENBERGER, Steve, 08056 Zwickau (DE)
(74) Vertreter: Wallinger, Michael

(57) **Zusammenfassung**

Die vorliegende Erfindung betrifft eine einfach zu reinigende Vorrichtung zur Zubereitung eines Mischgetränks, insbesondere zur Zubereitung eines proteinhaltigen Mischgetränks. Weiterhin betrifft die vorliegende Erfindung ein Verfahren zur Montage und zur Herstellung einer Vorrichtung zur Zubereitung eines Mischgetränks, welches sich insbesondere auf die vorstehend genannte Vorrichtung bezieht.

## Beschreibung

Die vorliegende Erfindung betrifft eine Vorrichtung zur Zubereitung eines Mischgetränks, insbesondere zur Zubereitung eines proteinhaltigen Mischgetränks. Weiterhin betrifft die vorliegende Erfindung ein Verfahren zur Montage und zur Herstellung einer Vorrichtung zur Zubereitung eines Mischgetränks, welches sich insbesondere auf die vorstehend genannte Vorrichtung bezieht.

Die Entwicklung einer solchen Vorrichtung zur Zubereitung eines Mischgetränks, wie zum Beispiel zur Zubereitung eines proteinhaltigen Mischgetränks oder Kaffee, in Getränkeautomaten hat neben verschiedenen Anforderungen wie Hygienebestimmungen, Produktvielfalt oder Getränkequalität auch eine hohe Wartungsfreundlichkeit zum Ziel.

Neben dem Austausch bei Verschleiß stellt vor allem die regelmäßige Reinigung der mit dem Mischgetränk in Kontakt stehenden Komponenten eine wesentliche Notwendigkeit dar, verschiedene Komponenten für den Betreiber leicht zugänglich zu halten. Diese Zugänglichkeit ist in der Regel nur durch eine aufwändige Demontage möglich. Die zu reinigenden Teile werden anschließend von Fremdkörpern und gesundheitsgefährdenden Keimen befreit und wieder in der Vorrichtung verbaut.

Insbesondere bei der Verwendung von milchhaltigen Produkten ergibt sich durch entstehende chemische Prozesse ein erhöhter Reinigungsaufwand.

Die Demontage und Montage unterliegt dabei der Gefahr, dass einzelne Komponenten nicht korrekt auseinander- und/oder zusammengebaut werden, wodurch der gewünschte Betrieb beeinträchtigt werden kann, was zu negativen Auswirkungen auf die Getränkequalität, bis hin zu einem Versagen der Vorrichtung führen kann.

Die vorliegende Erfindung stellt sich daher die Aufgabe Vorrichtungen und Verfahren zur Montage und Herstellung genannter Vorrichtung anzugeben, mit der und/oder dem die Wartung vereinfacht wird.

Diese Aufgabe wird erfindungsgemäß durch eine Vorrichtung nach Anspruch 1 gelöst. Bevorzugte Verfahren sind Gegenstände der Ansprüche 13 und 14. Zu bevorzugende Weiterbildungen der Erfindung sind Gegenstand der Unteransprüche.

Die Grundidee der Erfindung basiert auf einer von einer Antriebseinheit trennbar ausgestalteten Mischeinheit, wobei die Mischeinheit alle regelmäßig zu reinigenden Komponenten aufweist, und die Mischeinheit als Ganzes dem Reinigungsvorgang unterzogen werden kann, ohne dass es zusätzlicher Montageschritte bedarf.

Die erfindungsgemäße Vorrichtung hat somit den Vorteil, dass die zu reinigenden Teile nicht einzeln demontiert und wieder montiert werden müssen. Auf diese Weise reduziert sich der Wartungsaufwand, und die Möglichkeit einer fehlerhaften Montage wird erheblich eingeschränkt. Die Antriebseinheit treibt den Mischkörper der Mischeinheit nicht direkt über eine gemeinsame Welle an, sondern dient dazu eine zweite, in der Mischeinheit integrierte Welle über eine Kupplung anzutreiben. Eine Demontage des die Antriebseinheit abdichtenden Verschlusses und des Mischkörpers von der gemeinsamen Antriebswelle entfällt somit. Vielmehr beschränkt sich der Wartungsvorgang auf das Abnehmen des mit dem Mischkörper integral verbauten Verschlusses der Mischeinheit, wodurch die Komponenten der Mischeinheit im verbauten Zustand gereinigt werden können. Weiterhin hat die Erfindung den Vorteil, dass das die Komponenten zur Herstellung des Mischgetränks, wie beispielsweise ein rieselfähiges Substrat und Wasser, enthaltende Mischgehäuse ebenfalls als von der Mischeinheit lösbar ausgestaltet ist. Demzufolge reduziert sich der Wartungsvorgang auf ein Abnehmen des Mischgehäuses, ein Abnehmen des Verschlusses sowie einer anschließenden Reinigung mit abschließender Montage dieser Komponenten.

Unter einer "Vorrichtung zur Zubereitung eines Mischgetränks" im Sinne der vorliegenden Erfindung ist insbesondere eine manuelle, teilautomatisierte oder vollautomatisierte Getränkezubereitungsvorrichtung, insbesondere ein Getränkeautomat, zu verstehen. Das Getränk wird dabei im Zuge eines sogenannten Post-Mix-Verfahrens innerhalb der Vorrichtung zumindest teilweise zubereitet. Vorrichtungen, welche ausschließlich mittels eines sogenannten Pre-Mix-Verfahrens vorgefertigte Getränke in entnehmbare Behälter, beispielsweise Becher, oder bereits befüllte Behälter, beispielsweise Flaschen oder Getränkedosen, abgeben, sind explizit nicht mit umfasst.

"Proteine" im Sinne der vorliegenden Erfindung sind insbesondere biologische Makromoleküle, die aus Aminosäuren aufgebaut sind. Als analoge Begriffe sind "Eiweiße" oder "Eiweißstoffe" zu verstehen. Bausteine der Proteine sind bestimmte als proteinogen, also proteinaufbauend, bezeichnete Aminosäuren, die durch Peptidbindungen zu Ketten verbunden sind. Von besonderer Bedeutung sind hierbei die acht als essentiell bezeichneten Aminosäuren, die der Körper sie nicht selbst herstellen kann, sondern mit der Nahrung aufnehmen muss. Die Aminosäureketten können eine Länge von bis zu mehreren tausend Aminosäuren haben, wobei man Aminosäureketten mit einer Länge mehr als ca. 100 Aminosäuren als Proteine bezeichnet. Im Sinne der vorliegenden Erfindung sind jedoch auch die kurzkettigeren Peptide zu den Proteinen hinzuzuzählen.

Unter einem "proteinhaltigen Mischgetränk" im Sinne der vorliegenden Erfindung ist insbesondere eine Flüssigkeit zu verstehen, welche zum Verzehr, insbesondere durch einen Menschen geeignet ist, und welches Proteine aufweist, insbesondere in einer Menge von mehr als 2 Gew.-% bezogen auf das Gesamtgewicht des Getränks. Des Weiteren ist das "proteinhaltige Mischgetränk" im Sinne der vorliegenden Erfindung eine Flüssigkeit, welche sich aus mehreren Komponenten zusammensetzt, welche vor dem Verzehr, insbesondere kurz vor dem Verzehr miteinander vermischt werden.

Unter einer "Mischeinheit" im Sinne der vorliegenden Erfindung ist insbesondere eine Einrichtung zu verstehen, welche dafür vorgesehen ist, wenigstens zwei Ausgangsstoffe, insbesondere wenigstens drei Ausgangsstoffe, insbesondere ein rieselfähiges Substrat, ein wenigstens im Wesentlichen flüssiges Substrat und optional eine Trägerflüssigkeit, miteinander zu vermischen. Die erfindungsgemäße Mischeinrichtung weist hierfür insbesondere einen Mischkörper, wie ein Mischerrad und/oder eine Schraube und/oder einen Propeller, auf.

Unter einem "Mischgehäuse" im Sinne der vorliegenden Erfindung ist insbesondere eine Einrichtung zu verstehen, welche dafür vorgesehen ist, am Transfer eines Substrats hin zur Mischeinheit beteiligt zu sein, insbesondere die Verbindung, insbesondere von einem Behälter und/oder einer Leitung, insbesondere Wasserleitung, hin zur Mischeinheit herstellt. Mischgehäuse können passive Komponenten wie z.B. Schütten, Rohre oder Schläuche, und/oder aktive Komponenten aufweisen, wie z.B. Ventile, Schieber oder Fördereinrichtungen, insbesondere Pumpen, Schneckenförderer oder dergleichen.

Mischgehäuse können ferner einen Sammelabschnitt enthalten, welcher dafür vorgesehen ist, das, vorzugsweise rieselfähige Substrat und das, vorzugsweise wenigstens im Wesentlichen flüssige Substrat zusammenzuführen. Weiter können Mischgehäuse einen Mischabschnitt umfassen, welcher dafür vorgesehen ist, das rieselfähige Substrat und das wenigstens im Wesentlichen flüssige Substrat zu dem, insbesondere wenigstens im Wesentlichen homogenen, Mischgetränk zu vermischen. Weiter können Mischgehäuse einen Abgabeabschnitt umfassen, welcher dafür vorgesehen ist, das, insbesondere wenigstens im Wesentlichen homogene, Mischgetränk an eine Ausgabeeinrichtung abzugeben.

Unter einer "Ausgabeeinrichtung" im Sinne der vorliegenden Erfindung ist insbesondere eine Einrichtung zu verstehen, welche am Transfer des Getränks hin zu einem, insbesondere aus bzw. von der Vorrichtung entfernbaren, Behälter beteiligt ist, insbesondere die Verbindung, insbesondere von dem Mischgehäuse hin zu dem, insbesondere aus bzw. von der Vorrichtung entfernbaren, Behälter herstellt. Die Ausgabeeinrichtung kann passive Komponenten wie z.B. Trichter, Düsen, Rohre oder Schläuche, und/oder aktive Komponenten aufweisen, wie z.B. Ventile, Schieber, Aufschäumeinrichtungen oder Fördereinrichtungen, insbesondere Pumpen, Schneckenförderer oder dergleichen, und/oder Reinigungseinrichtungen.

Unter einem "Mischraum" im Sinne der vorliegenden Erfindung ist insbesondere ein Raum zu verstehen, der zumindest in fünf der sechs Ausdehnungsrichtungen des Raums nach dem kartesischen Koordinatensystem begrenzt ist und mit der Mischeinheit, und dem Mischgehäuse in Fluidverbindung steht. Der Mischraum ist dafür vorgesehen das rieselfähige Substrat und das flüssige Substrat zu enthalten und dem Mischkörper der Mischeinheit auszusetzen, derart dass die Mischeinheit über den Mischkörper turbulente Strömung innerhalb des Mischraums erzeugt wodurch das flüssige Substrat und das rieselfähige Substrat zu dem, wenigstens im Wesentlichen homogenen, Mischgetränk vermischt werden.

Unter einem "rieselfähigen Substrat" im Sinne der vorliegenden Erfindung ist insbesondere ein aus kleinen Festkörpern bestehender Stoff zu verstehen, insbesondere ein Puder, Pulver oder Granulat.

Unter einem "flüssigen Substrat" im Sinne der vorliegenden Erfindung ist insbesondere ein Stoff zu verstehen, welcher bei der definierten Raumtemperatur von 20 °C einer Formänderung so gut wie keinen, einer Volumenänderung hingegen einen recht großen Widerstand entgegensetzt. Unter einem flüssigen Substrat sind insbesondere alle diejenigen Stoffe zu verstehen, welche bei Raumtemperatur eine dynamische Viskosität η von bis zu 10⁸ mPa*s aufweist. Insbesondere ist unter einem flüssigen Substrat Wasser zu verstehen.

Unter einer "Welle" im Sinne der Erfindung ist ein längliches zylinderförmiges und rotierendes Maschinenelement, das zur Übertragung von Drehbewegungen und Drehmomenten dient, zu verstehen. Bei der Übertragung von Drehmomenten wird die Welle auf Torsion beansprucht und ist somit geeignet Rotationsenergie zu übertragen.

Unter einem "Kupplungselement" im Sinne der Erfindung ist ein Teil eines Maschinenelements zur starren, elastischen, beweglichen oder lösbaren Verbindung, in Zusammenspiel mit seinem Gegenstück, zweier Wellen zu verstehen. Eine nicht starre Kupplung kann neben einer formschlüssigen auch eine kraftschlüssige Verbindung sein. Durch die Verbindung wird es möglich, zwischen beiden Wellen Rotation und damit Drehmoment und letztlich mechanische Arbeit zu übertragen.

Unter einer "Antriebseinheit" im Sinne der Erfindung ist insbesondere eine Einrichtung zu verstehen, die dafür vorgesehen ist, mechanische Arbeit zu verrichten, indem sie eine Energieform, z. B. thermische, chemische, hydraulische, pneumatische oder elektrische Energie, in Bewegungsenergie umwandelt. In der Regel verfügen Antriebseinheiten über eine Welle, die sie in Rotation versetzen und durch sie mechanische Vorrichtungen antreiben. Ein Elektromotor als Ausführungsform einer Antriebseinheit ist ein elektromechanischer Wandler, der elektrische Leistung in mechanische Leistung umwandelt. In herkömmlichen Elektromotoren erzeugen stromdurchflossene Leiterspulen Magnetfelder, deren gegenseitige Anziehungs- und Abstoßungskräfte in Bewegung umgesetzt werden.

Nach einer bevorzugten Ausführungsform weist die Vorrichtung eine Verschlusseinrichtung und einen Antriebsgehäuseabschnitt auf, in den die erste Welle hineinragt und in dem das erste Kupplungselement angeordnet ist. Die Verschlusseinrichtung ist dazu eingerichtet, in einer zweiten Relativposition eine Öffnung des Antriebsgehäuseabschnitts, die in einer ersten Relativposition geöffnet ist, zu verschließen.

Auf diese Weise sind die elektrischen Komponenten vor dem Einfluss des rieselfähigen und/ flüssigen Substrats geschützt. Die Verschlusseinrichtung zeichnet sich zusätzlich dadurch aus, dass die Mischeinheit während des Betriebs sicher an der Antriebseinheit gehalten ist und das erste Kupplungselement der ersten Welle der Antriebseinheit fluchtend und in Eingriff mit dem zweiten Kupplungselement der zweiten Welle der Mischeinrichtung ausgerichtet ist.

Hierfür sind die Antriebseinheit und die Mischeinheit in genannter ersten Relativposition zueinander anordenbar, in der das erste Kupplungselement und das zweite Kupplungselement getrennt sind, und ferner in genannter zweiten Relativposition zueinander anordenbar, in der das erste Kupplungselement und das zweite Kupplungselement derart in Wirkverbindung stehen, dass Rotationsenergie von dem ersten Kupplungselement der ersten Welle auf die zweite Welle übertragbar ist.

Nach einer bevorzugten Ausführungsform weist die Verschlusseinrichtung ein erstes Verschlusselement, mit dem die zweite Welle drehbar, insbesondere lösbar, verbunden ist, auf. Ferner weist die Verschlusseinrichtung ein zweites Verschlusselement, welches mit dem Antriebsgehäuseabschnitt verbunden ist, auf. Das erste Verschlusselement und das zweite Verschlusselement sind dafür vorgesehen, die Öffnung des Antriebsgehäuseabschnitts in der zweiten Relativposition mit der Mischeinheit zu verschließen, insbesondere lösbar zu verbinden.

Unter einem "Verschlusselement" im Sinne der Erfindung ist insbesondere eine Vorrichtung zu verstehen, die dafür vorgesehen ist, mit einem Gegenstück eine Verbindung zur Übertragung mechanischer Kräfte einzugehen.

Unter einem "Antriebsgehäuseabschnitt" im Sinne der Erfindung ist insbesondere ein Abschnitt einer Vorrichtung zu verstehen, die dafür vorgesehen ist, den Antrieb vor äußeren Einflüssen zu schützen. Das Antriebsgehäuse kann ferner als Strukturteil der Vorrichtung ausgelegt sein. Das zweite Verschlusselement ist dabei mit dem Antriebsgehäuse verbunden. Die Verbindung kann lösbar sein oder über eine integrale Bauweise, wie beispielsweise in Form eines Spritzgussbauteils, vorliegen.

Nach einer bevorzugten Ausführungsform ist das erste Verschlusselement in eine erste Position **(A)** und eine zweite Position **(B)** relativ zu dem zweiten Verschlusselement durch eine Drehbewegung um eine durch die zweite Welle definierte Achse **(X)** drehbar ist, wobei die erste Position **(A)** und die zweite Position **(B)** voneinander verschieden sind.

Die erste Position **(A)** ist dabei eine Mischeinheit-Montage-Position ist, in der die Mischeinheit relativ zu der Antriebseinheit in axialer Richtung der Achse **(X)** bewegbar ist.

In der ersten Position ist die Mischeinheit somit von der Antriebseinheit abnehmbar oder kann in die zweite Position überführt werden.

Die zweite Position **(B)** ist dabei eine Betriebsposition, in der eine Bewegung der Mischeinheit in axialer Richtung der Achse **(X)** blockiert ist und das erste Verschlusselement mit dem zweiten Verschlusselement in Eingriff steht.

In Eingriff stehen bedeutet in dieser Ausführungsform, dass die Mischeinheit relativ zu dem Antriebsgehäuseabschnitt nur entlang eines rotatorischen Freiheitsgrads bewegbar ist.

Insbesondere rastet das erste Verschlusselement an dem zweiten Verschlusselement ein, sodass das erste Verschlusselement und das zweite Verschlusselement durch den Einrastmechanismus in allen Freiheitsgraden eingeschränkt sind. Der mechanische Widerstand des Einrastmechanismus ist dabei vorteilhafterweise derart ausgestaltet, dass ein Bediener diesen ohne übermäßigen Kraftaufwand überwinden kann.

Der Einrastmechanismus kann dabei derart ausgestaltet sein, dass an einer Außenseite des ersten Verschlusselements ein erstes Rastelement, insbesondere in Form eines Vorsprungs vorliegt, welcher in ein an dem zweiten Verschlusselement angebrachtes zweites Rastelement, insbesondere eine Aussparung, eingreift. Ein Einrasten hat den Vorteil, dass ein Bediener eine mechanische Resonanz für das korrekte Aufsetzen der Mischeinheit bekommt und eine ungewollte Verdrehung behindert wird.

Das erste Verschlusselement und das zweite Verschlusselement wirken dabei zusammen als Bajonettverschluss.

Nach einer bevorzugten Ausführungsform ist die Mischeinheit dazu eingerichtet, die Öffnung des Mischgehäuses in einen Kupplungsaufnahmeraum zu verschließen, wobei das Mischgehäuse relativ zu der Mischeinheit in einer ersten Mischgehäuseposition, in der die Öffnung des Mischgehäuses verschlossen ist, und in einer zweiten Mischgehäuseposition, in der die Öffnung des Mischgehäuses geöffnet ist, anordenbar ist.

Nach dieser Ausführungsform ist die Mischeinheit und das Mischgehäuse voneinander lösbar ausgestaltet. Das Mischgehäuse kann somit einzeln von der Vorrichtung abgenommen werden und gereinigt werden. Ferner kann das Mischgehäuse auch ausgetauscht oder durch ein anderes Modell ersetzt werden.

Nach einer bevorzugten Ausführungsform ist das erste Verschlusselement und das zweite Verschlusselement jeweils mindestens eine, insbesondere zumindest teilweise identische, Aussparung aufweisen. Das Mischgehäuse weist ein drittes Verschlusselement, insbesondere mindestens einen Vorsprung, auf, wobei in der zweiten Position **(B)** das dritte Verschlusselement mit den jeweiligen Aussparungen derart in Eingriff steht, dass eine Rotation des Mischgehäuses um die Achse **(X)** blockiert ist.

Eine Ausrichtung des Mischgehäuses an der Antriebseinheit ist dahingehend vorteilhaft, da die Antriebseinheit als Bestandteil der Vorrichtung in der Regel nicht bewegt wird. Eine "Verankerung" des Mischgehäuses an dem ersten und zweiten Verschlusselement ist somit vorteilhaft, da das Mischgehäuse in der für den der Schwerkraft unterliegenden Fluidkreislauf optimalen Position gerichtet angebracht werden kann, wie nachstehend erläutert.

Nach einer bevorzugten Ausführungsform ist dabei das erste Verschlusselement in eine dritte Position **(C)** relativ zu dem zweiten Verschlusselement durch eine Drehbewegung um die Achse **(X)** bewegbar, wobei die dritte Position **(C),** die erste Position **(A)** und die zweite Position **(B)** voneinander verschieden sind.

Die dritte Position **(C)** ist dabei ein Mischgehäuse-Montage-Position, in der das Mischgehäuse relativ zu der Mischeinheit in axialer Richtung der Achse **(X)** bewegbar, und das erste Verschlusselement mit dem zweiten Verschlusselement in Eingriff steht. Insbesondere rastet das erste Verschlusselement an dem zweiten Verschlusselement analog zur zweiten Position an einer jeweiligen Stelle ein. In der dritten Position ist das Mischgehäuse somit von der Mischeinheit abnehmbar oder kann in die zweite Position überführt werden.

Ein Einrasten hat dabei wieder den Vorteil, dass ein Bediener eine mechanische Resonanz für das korrekte Aufsetzen der Mischeinheit bekommt und eine ungewollte Verdrehung behindert wird.

In der zweiten Position **(B)** steht das dritte Verschlusselement mit dem zweiten Verschlusselement in Eingriff, und eine Bewegung des Mischgehäuses von der Antriebsaufnahme ist in axialer Richtung der Achse **(X)** blockiert. In Eingriff stehen bedeutet in diesem Fall, dass das Mischgehäuse in allen Freiheitsgraden eingeschränkt ist und somit keine Relativbewegung des Mischgehäuses zu der Vorrichtung möglich ist.

Das dritte Verschlusselement und das zweite Verschlusselement wirken dabei zusammen als Bajonettverschluss.

Nach einer bevorzugten Ausführungsform ist das erste Kupplungselement und das zweite Kupplungselement als formschlüssige Kupplung, insbesondere als Klauenkupplung, vorgesehen. Klauenkupplungen greifen zwei oder mehr Fortsätze an einem der beiden Wellenenden hinter entsprechende Verdickungen am gegenüberliegenden Wellenende und ermöglichen dadurch eine Momentübertragung durch Drehen.

Nach einer bevorzugten Ausführungsform ist das erste Kupplungselement und das zweite Kupplungselement als reibschlüssige Kupplung, insbesondere als Kegelkupplung, vorgesehen. Eine Kegelkupplung besitzt zwei Kegelelemente mit gleichem Kegelwinkel. Eines der beiden Kegelelemente ist dabei in axiale Richtung verschiebbar, beispielsweise durch den Einsatz auf einer Keilwelle. Bei Betätigung der Kupplung wird eine Anpresskraft in axiale Richtung aufgebracht, die Normalkräfte an den Mantelflächen der Kegelelemente hervorruft. Diese Normalkraft ist proportional zur Anpresskraft und außerdem abhängig vom Kegelwinkel. Je flacher der Kegel, desto höher die hervorgerufene Normalkraft. Das durch die Kegelkupplung übertragbare Drehmoment ist proportional zur Normalkraft auf die Kegelflächen und hängt weiterhin vom Reibungskoeffizienten der Reibfläche ab. Je höher der Reibungskoeffizient, desto höher das übertragbare Drehmoment

Nach einer bevorzugten Ausführungsform ist das zweite Kupplungselement drehbar in dem Antriebsgehäuseabschnitt gelagert. Die Antriebseinheit kann somit von dem Antriebsgehäuse abgenommen werden, während das zweite Kupplungselement in dem Antriebsgehäuse verbleibt. Dies hat den Vorteil, dass das zweite Kupplungselement bei einem Ausbau der Antriebseinheit nicht erneut ausgerichtet werden muss.

Nach einer bevorzugten Ausführungsform weist die Vorrichtung ferner einen Pulvertrichter auf, wobei der Pulvertrichter dafür vorgesehen ist, mit dem rieselfähigen Substrat befüllbar zu sein. Der Pulvertrichter ist dabei lösbar mit dem Mischgehäuse verbunden und kann je nach Anwendungsfall verschieden dimensioniert und austauschbar sein. Der Pulvertrichter ist dabei dazu vorgesehen das rieselfähige Substrat dem Mischgehäuse zuzuführen und ein mögliches Verschütten des rieselfähigen Substrats zu vermeiden.

Ein erfindungsgemäßes Verfahren zur Montage einer Vorrichtung zur Zubereitung eines, insbesondere proteinhaltigen, Mischgetränks, und insbesondere zur Durchführung in einer Vorrichtung der oben beschriebenen Art, weist die folgenden Schritte auf:
(a) Bereitstellen einer Antriebseinheit aufweisend eine von der Antriebseinheit angetriebene erste Welle, die mit einem ersten Kupplungselement drehfest verbunden ist;
(b) Bereitstellen einer Mischeinheit aufweisend eine zweite Welle, ein zweites Kupplungselement und einen Mischkörper, wobei ein erstes Ende der zweiten Welle mit dem zweiten Kupplungselement und ein zweites Ende der zweiten Welle mit dem Mischkörper drehfest verbunden ist, und
   eines Mischgehäuses aufweisend einen Mischraum, wobei der Mischraum dafür vorgesehen ist, ein rieselfähiges Substrat und ein wenigstens im Wesentlichen flüssiges Substrat aufzunehmen, wobei der Mischkörper durch eine Öffnung des Mischgehäuses in den Mischraum hineinragt, um dort durch Rotation das rieselfähige Substrat und das wenigstens im Wesentlichen flüssige Substrat zu vermischen;
(c) Versehen, insbesondere Verbinden, der Antriebseinheit mit der Mischeinheit,
   wobei die Antriebseinheit und die Mischeinheit in einer ersten Relativposition zueinander anordenbar sind, in der das erste Kupplungselement und das zweite Kupplungselement getrennt sind, und
   wobei die Antriebseinheit und die Mischeinheit in einer zweiten Relativposition zueinander anordenbar sind, in der das erste Kupplungselement und das zweite Kupplungselement derart in Wirkverbindung stehen, dass Rotationsenergie von dem ersten Kupplungselement der ersten Welle auf die zweite Welle übertragbar ist.

Bezüglich der sich hieraus ergebenden Vorteile, insbesondere hinsichtlich der erhöhten Wartungsfreundlichkeit, wird zur Vermeidung von Wiederholungen auf die obigen Erläuterungen zu den verschiedenen Ausführungsformen der Vorrichtung verwiesen, welche hier im selben Umfang Gültigkeit besitzen.

Ein erfindungsgemäßes Verfahren zur Herstellung einer Vorrichtung zur Zubereitung eines, insbesondere proteinhaltigen, Mischgetränks, und insbesondere zur Herstellung einer Vorrichtung der oben beschriebenen Art weist die folgenden Schritte auf:
(a) Herstellen einer Antriebseinheit aufweisend eine von der Antriebseinheit angetriebene erste Welle, die mit einem ersten Kupplungselement drehfest verbunden ist;
(b) Herstellen einer Mischeinheit aufweisend eine zweite Welle, ein zweites Kupplungselement und einen Mischkörper, wobei ein erstes Ende der zweiten Welle mit dem zweiten Kupplungselement und ein zweites Ende der zweiten Welle mit dem Mischkörper drehfest verbunden ist
   wobei die Antriebseinheit und die Mischeinheit in einer ersten Relativposition zueinander anordenbar sind, in der das erste Kupplungselement und das zweite Kupplungselement getrennt sind, und
   wobei die Antriebseinheit und die Mischeinheit in einer zweiten Relativposition zueinander anordenbar sind, in der das erste Kupplungselement und das zweite Kupplungselement derart in Wirkverbindung stehen, dass Rotationsenergie von dem ersten Kupplungselement der ersten Welle auf die zweite Welle übertragbar ist.

Bezüglich der sich hieraus ergebenden Vorteile wird zur Vermeidung von Wiederholungen auf die obigen Erläuterungen zu den verschiedenen Ausführungsformen der Vorrichtung verwiesen, welche hier im selben Umfang Gültigkeit besitzen.

Eine erfindungsgemäße Verwendung sieht vor, die oben beschriebene Vorrichtung über das oben beschriebene Verfahren zu montieren, wobei die Vorrichtung über das oben beschriebene Verfahren hergestellt, ist bei der Zubereitung eines, insbesondere proteinhaltigen, Mischgetränks einzusetzen.

Bezüglich der sich hieraus ergebenden Vorteile, insbesondere hinsichtlich der Wartungsfreundlichkeit, wird auf die obigen Erläuterungen zu den verschiedenen Ausführungsformen der Vorrichtung und des Verfahrens verwiesen, welche hier im selben Umfang Gültigkeit besitzen.

Weitere vorteilhafte Weiterbildungen der vorliegenden Erfindung ergeben sich aus den Unteransprüchen und der nachfolgenden Beschreibung bevorzugter Ausführungsformen. Hierzu zeigt:
Fig. 1 eine Prinzipskizze oben beschriebenen erfindungsgemäßen Vorrichtung;
Fig. 2 eine Explosionszeichnung einer Ausführungsform der oben beschriebenen Mischeinheit;
Fig. 3 zwei Ansichten einer Ausführungsform der oben beschriebenen Mischeinheit;
Fig. 4 drei Ansichten einer Ausführungsform des oben beschriebenen Antriebsgehäuseabschnitts;
Fig. 5 eine Ausführungsform des oben beschriebenen Antriebsgehäuseabschnitts und einer Mischeinheit in einer ersten Relativposition;
Fig. 6 eine Ausführungsform des oben beschriebenen Antriebsgehäuseabschnitts und einer Mischeinheit in einer zweiten Relativposition;
Fig. 7 eine Ausführungsform der oben beschriebenen Vorrichtung in einer Betriebsposition;
Fig. 8 eine Explosionszeichnung einer Ausführungsform der oben beschriebenen Vorrichtung;
Fig. 9 eine Darstellung von Montageschritten eines oben beschriebenen Verfahrens;
Fig. 10 eine Stellung der Mischeinheit in einer ersten, einer zweiten und einer dritten Position;
Fig. 11 ein Flussdiagramm des erfindungsgemäßen Verfahrens zur Montage;
Fig. 12 ein Flussdiagramm des erfindungsgemäßen Verfahrens zur Herstellung.

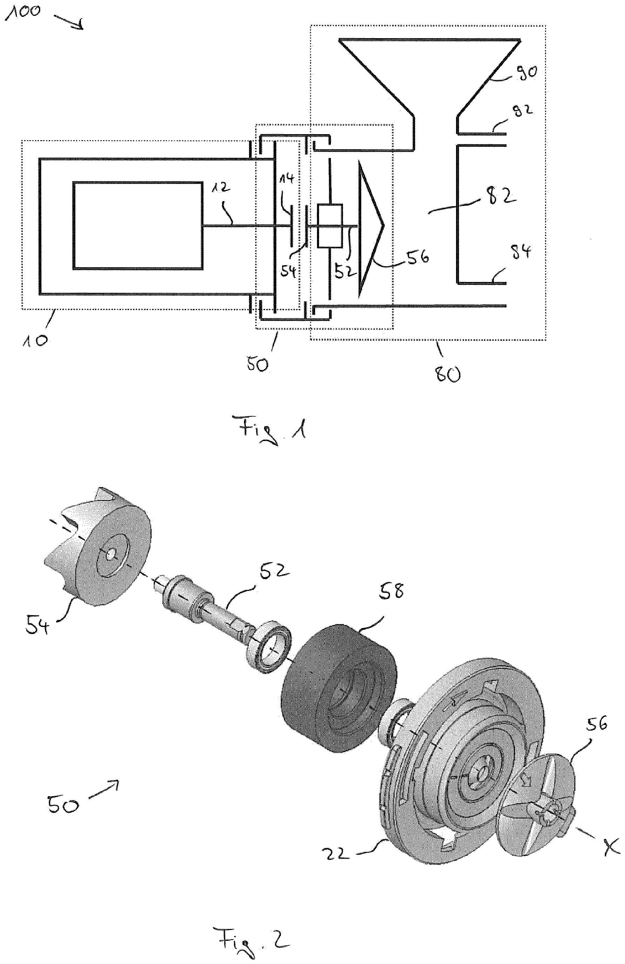

Fig. 1 zeigt eine Prinzipskizze oben beschriebenen erfindungsgemäßen Vorrichtung 100 zur Zubereitung eines, insbesondere proteinhaltigen, Mischgetränks

Die Vorrichtung 100 weist eine Antriebseinheit 10, eine Mischeinheit 50 und eine Mischgehäuse 80 auf.

Die Antriebseinheit 10 ist mit einer von der Antriebseinheit 10 angetriebenen erste Welle 12 und einem ersten Kupplungselement 14 drehfest verbunden.

Die Mischeinheit 50 weist eine zweite Welle 52, ein zweites Kupplungselement 54 und einen Mischkörper 56 auf, wobei ein erstes Ende der zweiten Welle 52 mit dem zweiten Kupplungselement 54 und ein zweites Ende der zweiten Welle 52 mit dem Mischkörper 56 drehfest verbunden ist.

Das Mischgehäuse 80, weist einen Mischraum 82 auf, wobei der Mischraum 82 dafür vorgesehen ist, ein rieselfähiges Substrat und ein wenigstens im Wesentlichen flüssiges Substrat aufzunehmen, wobei der Mischkörper 56 durch eine Öffnung des Mischgehäuses 80 in den Mischraum 82 hineinragt, um dort durch Rotation das rieselfähige Substrat und das wenigstens im Wesentlichen flüssige Substrat zu vermischen.

Die Antriebseinheit 10 und die Mischeinheit 50 sind in einer ersten Relativposition zueinander anordenbar sind, in der das erste Kupplungselement 14 und das zweite Kupplungselement 54 getrennt sind.

Die Antriebseinheit 10 und die Mischeinheit 50 sind in einer zweiten Relativposition zueinander anordenbar, in der das erste Kupplungselement 14 und das zweite Kupplungselement 54 derart in Wirkverbindung stehen, dass Rotationsenergie von dem ersten Kupplungselement 14 der ersten Welle 12 auf die zweite Welle 52 übertragbar ist.

Das Mischgehäuse weist dabei einen Pulvertrichter 90, sowie einen Zulauf 92 und einen Ablauf 94 auf. Der Zulauf 92 dient dem Anschluss eines Zugangs des wenigstens im Wesentlichen flüssigen Substrats. Der Ablauf 94 dient dem Anschluss an einen Abgabeabschnitt, welcher dafür vorgesehen ist, das, insbesondere wenigstens im Wesentlichen homogene, Mischgetränk an eine Ausgabeeinrichtung abzugeben.

Fig. 2 zeigt eine Explosionszeichnung einer Ausführungsform der oben beschriebenen Mischeinheit. Die Mischeinheit 50 weist eine zweite Welle 52, ein zweites Kupplungselement 54 und einen Mischkörper 56 auf, wobei ein erstes Ende der zweiten Welle 52 mit dem zweiten Kupplungselement 54 und ein zweites Ende der zweiten Welle 52 mit dem Mischkörper 56 drehfest verbunden ist. Die Mischeinheit 50 weist ferner ein erstes Verschlusselement 22, insbesondere ein Drehverschlusselement, mit dem die zweite Welle 52 drehbar, insbesondere lösbar, verbunden ist. Der Mischkörper 56 ist insbesondere ein Mixerrad. Das zweite Kupplungselement 54 kann dabei über ein Gewinde an der zweiten Welle 52 befestigt sein, oder über eine Presspassung aufgepresst werden. Das zweite Kupplungselement 54 ist im vorliegenden Fall als Klauenkupplungselement mit einem axial gerichteten Zahnkranz ausgebildet. Das zweite Kupplungselement 54, wie auch das erste Kupplungselement 14, kann dabei aus einem metallischen Werkstoff oder aus einem Kunststoff hergestellt sein. Hierfür eignen sich besonders abriebfeste Hochleistungskunststoffe wie POM-C oder Polyamid. POM-C gehört zu der Gruppe der farblosen, teilkristallinen Polymere wird hauptsächlich zur Herstellung von Formteilen im Spritzgussverfahren verwendet. Wegen der hohen Steifigkeit, niedrigen Reibwerten und guter Dimensionsstabilitäten werden Polyoxymethylene für die Herstellung von Präzisionsteilen eingesetzt. Kennzeichnendes Strukturelement ist eine unverzweigte Acetal-Gruppe (∼C-O-CH₂-O-C∼).

Das erste Verschlusselement 22 ist in der vorliegenden Ausführungsform über einen Zylinder 58 auf zwei Lagern mit der Welle gekoppelt, wobei der Zylinder vorzugsweise ebenfalls aus POM-C gefertigt ist. Der Zylinder 58 kann auch aus einem flexiblen Material gefertigt sein, was den Vorteil hat, dass bei der Montage durch den Bediener induzierte Lastspitzen, wie beispielsweise durch unverhältnismäßig hohen Kraftaufwand beim Öffnen, die eingeleitete Rotationsenergie in Spannenergie innerhalb des Zylinders umgewandelt wird, und somit eine Beschädigung bruchgefährdeter Stellen des Verschlusselements 22 vermieden werden kann. Der Mischkörper 56 ist in Fig. 2 als Mischrad ausgeführt und an dem der Antriebseinheit abgewandten Seite angebracht. Das Mischrad ist dabei kraftschlüssig mit der Welle verbunden und kann von einem Bediener nicht ohne weiteres abgenommen werden. Zusätzlich kann zur besseren Abdichtung der Kontaktfläche des zweiten Verschlusselements 22 mit dem Mischgehäuse 80 ein O-Ring zur Dichtung vorgesehen sein (nicht gezeigt).

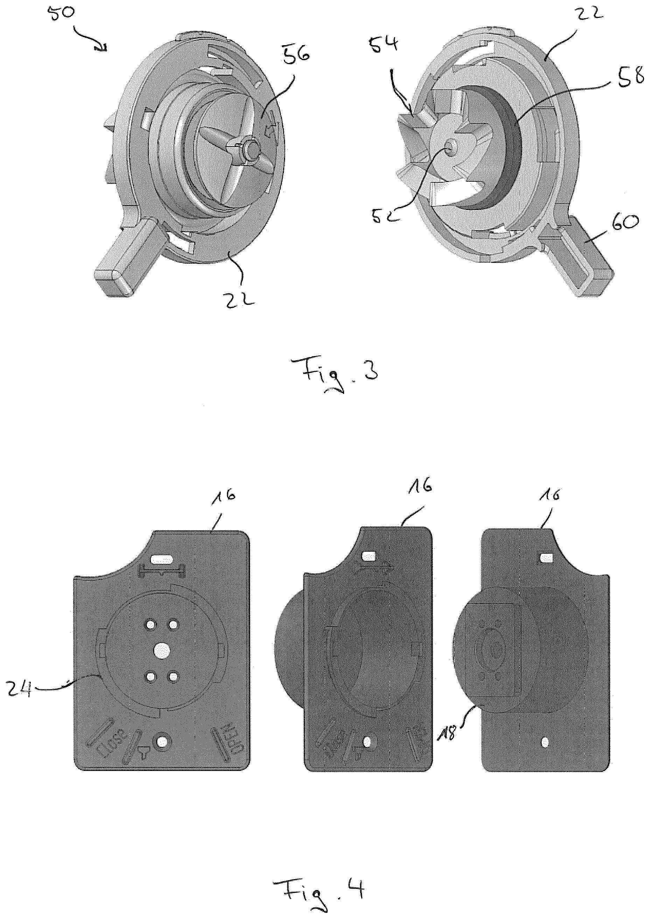

Fig. 3 zeigt zwei Ansichten einer Ausführungsform der oben beschriebenen Mischeinheit 50. Dabei zeigt Fig. 3 einmal die dem Mischgehäuse zugewandte Seite (links) und die der Antriebseinheit zugewandten Seite (rechts). Beiden Ansichten ist die vorteilhafte kompakte Bauform zu entnehmen. Die linke Ansicht zeigt den auf der zweiten Welle 52 aufgesetzten Mischkörper 56 und das zweite Verschlusselement 22. Die rechte Ansicht zeigt den auf die zweite Welle 52 aufgesetzten Zylinder 58 und das zweite Verschlusselement 22. An das zweite Verschlusselement 22 ist zusätzlich ein Bedienhebel angebracht über den der Bediener die, für die Drehung des zweiten Verschlusselements 22 notwendige Energie einleiten kann. Das zweite Verschlusselement 22 ist vorzugsweise ein spritzgegossenes Kunststoffbauteil.

Alle Komponenten der Mischeinheit 50 sind für die Wartung im verbauten Zustand zu belassen und können als ein Teil gereinigt werden. Insbesondere eine Demontage des reinigungsintensiven Mischkörpers 56 entfällt.

Fig. 4 zeigt drei Ansichten einer Ausführungsform des oben beschriebenen Antriebsgehäuseabschnitts 16. Das erste Verschlusselement 22 und das zweite Verschlusselement 24 sind dafür vorgesehen, die Öffnung des Antriebsgehäuseabschnitts 16 in der zweiten Relativposition mit der Mischeinheit 50 zu verschließen, insbesondere lösbar zu verbinden. Ferner weist der Antriebsgehäuseabschnitt 16 einen Kupplungsaufnahmeraum 18 auf. Der Kupplungsaufnahmeraum 18 dient dazu, das erste Kupplungselement 14 und das zweite Kupplungselement 54 vor äußeren Einflüssen zu schützen. Weiterhin kann an den Antriebsgehäuseabschnitt 16 ein erstes Rastelement angebracht sein. Durch ein Zusammenwirken mit einem mit dem zweiten Verschlusselement 52 verbundenen zweiten Rastelement können somit Relativpositionen von Mischeinheit 50 zu Antriebsgehäuseabschnitt 16 definiert werden, und für einen Bediener, durch den für den Einrastvorgang zu überwindenden Widerstand erkennbar gemacht werden. Ferner hat das Einrasten den Vorteil, dass die jeweilige Relativposition gegen ungewolltes Verdrehen gehemmt wird. Typischerweise werden die Relativpositionen zusätzlich durch eine der Stellung des Bedienhebels entsprechenden Markierung an einem einsehbaren Bereich des Antriebsgehäuseabschnitts 16 für den Bediener kenntlich gemacht.

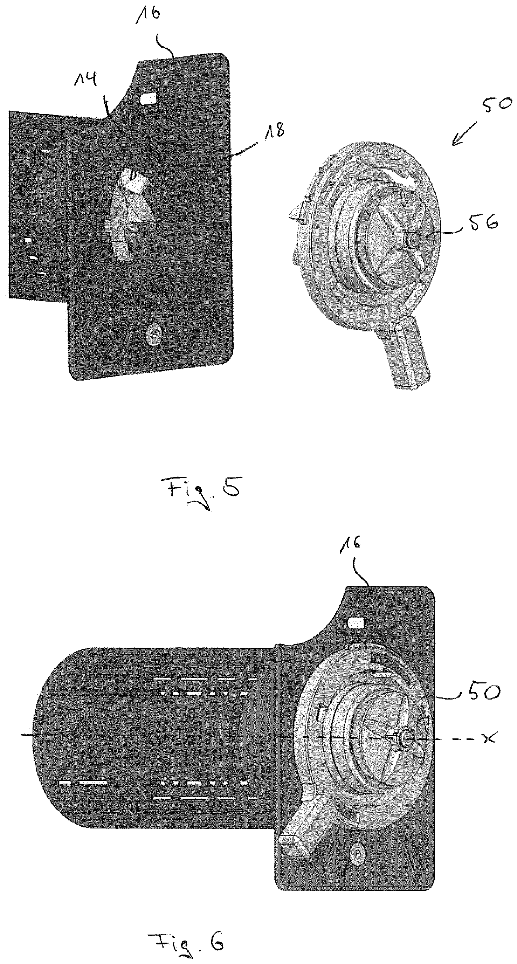

Fig. 5 und Fig. 6 zeigen jeweils eine Ausführungsform des oben beschriebenen Antriebsgehäuseabschnitts 16 und einer Mischeinheit 50 in einer ersten Relativposition und in einer zweiten Relativposition. In der in Fig. 5 gezeigten ersten Relativposition sind die Mischeinheit 50 und der Antriebsgehäuseabschnitt voneinander getrennt. Die Mischeinheit 50 kann somit gereinigt werden, ohne dass beispielsweise der reinigungsintensive Mischkörper 56 abgenommen werden muss. In dem Kupplungsaufnahmeraum 18 des Antriebsgehäuseabschnitts 16 ist das erste Kupplungselement 14 drehbar gelagert und mit der ersten Welle 12 der Antriebseinheit 10 verbunden. Das erste Kupplungselement 14 kann dabei aus einem metallischen Werkstoff oder aus einem Kunststoff hergestellt sein. Hierfür eignen sich besonders abriebfeste Hochleistungskunststoffe wie Polyamid. Das erste Kupplungselement 14 überträgt die von der Antriebseinheit 10 bereitgestellte Rotationsenergie an das zweite Kupplungselement 54. Das an der zweite Kupplungselement 54 treibt den mit der zweiten Welle 52 verbundenen Mischkörper 56 an, welcher wiederum das rieselfähige Substrat und das im Wesentlichen flüssige Substrat vermischt. In der in Fig. 6 gezeigten zweiten Relativposition ist die Mischeinheit 50 mit dem Antriebsgehäuseabschnitt 16 verbunden. Das zweite Kupplungselement 24 steht mit dem ersten Kupplungselement 14 in Wirkverbindung, sodass Rotationsenergie von der ersten Welle 12 auf die zweite Welle 52 übertragbar ist.

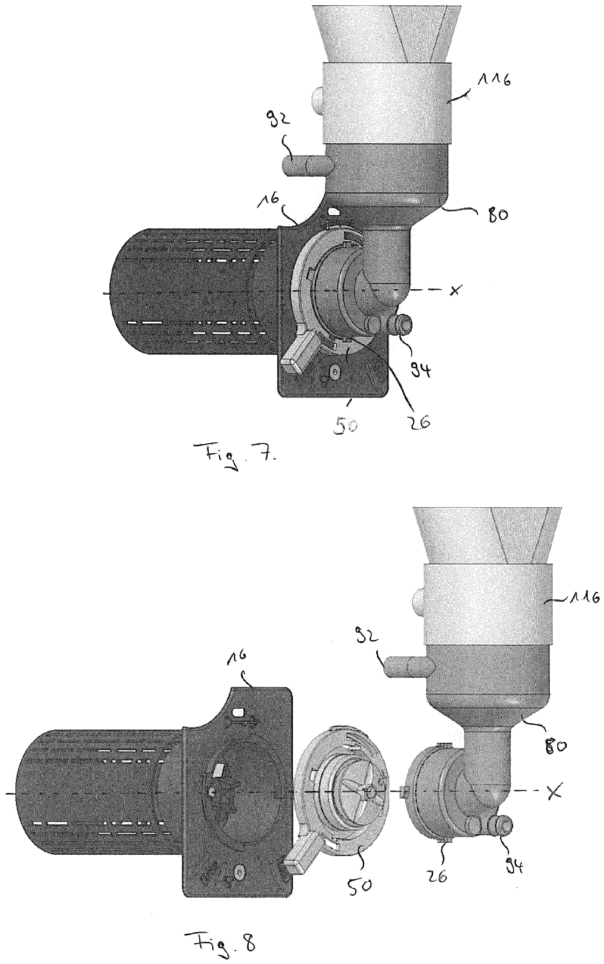

Fig. 7 zeigt eine Ausführungsform der oben beschriebenen Vorrichtung 100 in einer Betriebsposition. In der Betriebsposition, oder zweiten Position **(B),** ist eine Bewegung der Mischeinheit 50 in axialer Richtung der Achse **(X)** blockiert, und das erste Verschlusselement 22 steht mit dem zweiten Verschlusselement 24 und dem dritten Verschlusselement 26 in Eingriff, und insbesondere rastet das erste Verschlusselement 22 an dem zweiten Verschlusselement 24 ein. Das dritte Verschlusselement 26 ist dabei insbesondere eine Mehrzahl an Verschlusselementen die in regelmäßigen Abständen, insbesondere vier Verschlusselemente im Abstand von 90°, an dem Mischgehäuse 80 angebracht sind. Der Antriebsgehäuseabschnitt 16, die Mischeinheit 50 und das Mischgehäuse sind fest miteinander verbunden und es ist lediglich eine rotatorische Relativbewegung des zweiten Verschlusselements 22 möglich. Vorteilhafterweise ist die Betriebsposition durch einen Anschlag an dem zweiten Verschlusselement 24 definiert. Ferner ist in Fig. 7 ein Pulvertrichter 116 gezeigt. Der Pulvertrichter 116 ist dabei lösbar mit dem Mischgehäuse 80 verbunden und kann je nach Anwendungsfall verschieden dimensioniert und austauschbar sein. Der Pulvertrichter 116 ist dabei dazu vorgesehen das rieselfähige Substrat dem Mischgehäuse 80 zuzuführen und ein mögliches Verschütten des rieselfähigen Substrats zu vermeiden. Weiter ist ein Zulauf 92 und ein Ablauf 94 gezeigt. Der Zulauf 92 dient dem Anschluss eines Zugangs des wenigstens im Wesentlichen flüssigen Substrats. Der Ablauf 94 dient dem Anschluss in einen Abgabeabschnitt, welcher dafür vorgesehen ist, das, insbesondere wenigstens im Wesentlichen homogene, Mischgetränk an eine Ausgabeeinrichtung abzugeben.

Fig. 8 zeigt eine Explosionszeichnung der oben beschriebenen Vorrichtung 100. Der Antriebsgehäuseabschnitt 16, die Mischeinheit 50 und das Mischgehäuse 80 sind voneinander getrennt in der, der Betriebsposition entsprechenden, Relativposition auf der Achse **(X)** dargestellt.

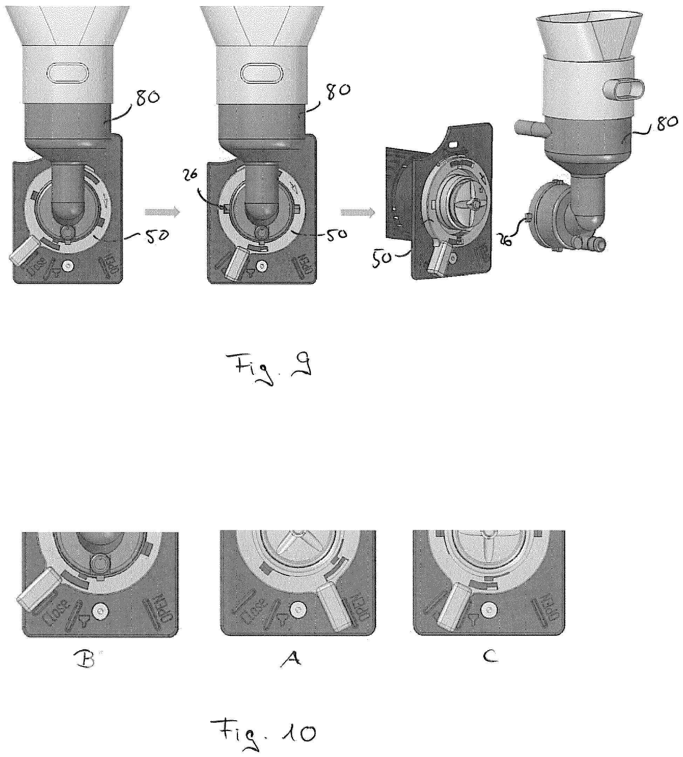

Fig. 9 zeigt eine Darstellung von Montageschritten eines oben beschriebenen Verfahrens. Insbesondere zeigt die Darstellung die Demontage des Mischgehäuses 80. In der linken Darstellung von Fig. 9 ist die Vorrichtung in der Betriebsposition. Wird nun, wie in der mittleren Darstellung gezeigt, der Bedienhebel von der Betriebsposition **(B)** in die Mischgehäuse-Montage-Position **(C)** gelenkt, gibt das erste Verschlusselement 22 das dritte Verschlusselement 26 aus den Aussparungen von erstem Verschlusselement 22 und zweitem Verschlusselement 24 frei. Wie in der rechten Darstellung gezeigt kann das Mischgehäuse 80 somit von der Mischeinheit 50 abgezogen werden. Um anschließend die Mischeinheit 50 von dem Antriebsgehäuseabschnitt abzunehmen wird das erste Verschlusselement 22 der Mischeinheit 50 in die erste Position **(A),** oder Mischeinheit-Montage-Position, überführt (nicht gezeigt).

Fig. 10 zeigt eine Stellung der Mischeinheit 50 in einer ersten, einer zweiten und einer dritten Position.

Die erste Position **(A),** mittlere Darstellung der Fig. 10, ist eine Mischeinheit-Montage-Position, in der die Mischeinheit 50 relativ zu der Antriebseinheit 10 in axialer Richtung der Achse **(X)** bewegbar ist.

Die zweite Position **(B),** linke Darstellung der Fig. 10, ist eine Betriebsposition, in der eine Bewegung der Mischeinheit 50 in axialer Richtung der Achse **(X)** blockiert ist und das erste Verschlusselement 22 mit dem zweiten Verschlusselement 24 in Eingriff steht, und insbesondere das erste Verschlusselement 22 an dem zweiten Verschlusselement 24 einrastet.

Insbesondere derart, dass das erste Verschlusselement 22 und das zweite Verschlusselement 24 zusammen als Bajonettverschluss wirken.

Die dritte Position **(C),** rechte Darstellung der Fig. 10, ist eine Mischgehäuse-Montage-Position, in der das Mischgehäuse 80 relativ zu der Mischeinheit 50 in axialer Richtung der Achse **(X)** bewegbar ist, und das erste Verschlusselement 22 mit dem zweiten Verschlusselement 24 in Eingriff steht, und insbesondere das erste Verschlusselement 22 an dem zweiten Verschlusselement 24 einrastet.

In der zweiten Position **(B)** steht das dritte Verschlusselement 26 mit dem zweiten Verschlusselement 24 in Eingriff, und eine Bewegung des Mischgehäuses 80 von der Antriebsaufnahme 16 ist in axialer Richtung der Achse **(X)** blockiert.

Insbesondere derart, dass das dritte Verschlusselement 26 und das zweite Verschlusselement 24 zusammen als Bajonettverschluss wirken.

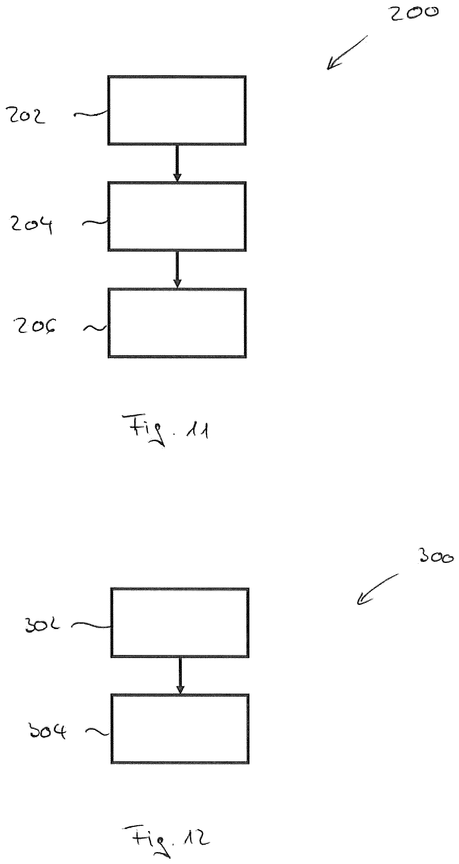

Fig. 11 zeigt ein Flussdiagramm des erfindungsgemäßen Verfahrens 200 zur Montage einer Vorrichtung zur Zubereitung eines, insbesondere proteinhaltigen, Mischgetränks, und insbesondere zur Durchführung in einer Vorrichtung 100, aufweisend die folgenden Schritte:
In Schritt 202 werden eine Antriebseinheit 10, aufweisend eine von der Antriebseinheit 10 angetriebene erste Welle 12, die mit einem ersten Kupplungselement 14 drehfest verbunden ist, bereitgestellt.

In Schritt 204 werden eine Mischeinheit 50, aufweisend eine zweite Welle 52, ein zweites Kupplungselement 54 und ein Mischkörper 56, wobei ein erstes Ende der zweiten Welle 52 mit dem zweiten Kupplungselement 54 und ein zweites Ende der zweiten Welle 52 mit dem Mischkörper 56 drehfest verbunden ist, bereitgestellt.

Zusätzlich werden in Schritt 204 ein Mischgehäuse 80, aufweisend einen Mischraum 82, wobei der Mischraum 82 dafür vorgesehen ist, ein rieselfähiges Substrat und ein wenigstens im Wesentlichen flüssiges Substrat aufzunehmen, wobei der Mischkörper 56 durch eine Öffnung des Mischgehäuses 80 in den Mischraum 82 hineinragt, um dort durch Rotation das rieselfähige Substrat und das wenigstens im Wesentlichen flüssige Substrat zu vermischen;

In Schritt 206 wird die Antriebseinheit 10 mit der Mischeinheit 50 versehen, insbesondere verbunden.

Die Antriebseinheit 10 und die Mischeinheit 50 sind in einer ersten Relativposition zueinander anordenbar, in der das erste Kupplungselement 14 und das zweite Kupplungselement 54 getrennt sind.

Ferner sind die Antriebseinheit 10 und die Mischeinheit 50 in einer zweiten Relativposition zueinander anordenbar, in der das erste Kupplungselement 14 und das zweite Kupplungselement 54 derart in Wirkverbindung stehen, dass Rotationsenergie von dem ersten Kupplungselement 14 der ersten Welle 12 auf die zweite Welle 52 übertragbar ist.

Fig. 12 zeigt ein Flussdiagramm des erfindungsgemäßen Verfahrens 300 zur Herstellung einer Vorrichtung zur Zubereitung eines, insbesondere proteinhaltigen, Mischgetränks, und insbesondere zur Herstellung einer Vorrichtung.

In Schritt 302 wird eine Antriebseinheit 10 aufweisend eine von der Antriebseinheit 10 angetriebene erste Welle 12, die mit einem ersten Kupplungselement 14 drehfest verbunden ist, hergestellt.

In Schritt 304 wird eine Mischeinheit 50 aufweisend eine zweite Welle 52, ein zweites Kupplungselement 54 und einen Mischkörper 56, wobei ein erstes Ende der zweiten Welle 52 mit dem zweiten Kupplungselement 54 und ein zweites Ende der zweiten Welle 52 mit dem Mischkörper 56 drehfest verbunden ist, hergestellt.

Die Antriebseinheit 10 und die Mischeinheit 50 sind in einer ersten Relativposition zueinander anordenbar, in der das erste Kupplungselement (14) und das zweite Kupplungselement (54) getrennt sind. In einer zweiten Relativposition sind das erste Kupplungselement 14 und das zweite Kupplungselement 54 derart in Wirkverbindung stehen, dass Rotationsenergie von dem ersten Kupplungselement 14 der ersten Welle 12 auf die zweite Welle 52 übertragbar ist.

Bei dem hier beschriebenen Verfahren ist es möglich, insbesondere wenigstens, die Schritte 302 und 304 sequentiell oder parallel oder in Teilschritten wechselweise oder in beliebiger Kombination auszuführen.

### Referenzzeichenliste

- 10: Antriebseinheit
- 12: erste Welle
- 14: erstes Kupplungselement
- 16: Antriebsgehäuseabschnitt
- 18: Kupplungsaufnahmeraum
- 20: Verschlusseinrichtung
- 22: erstes Verschlusselement
- 24: zweites Verschlusselement
- 26: drittes Verschlusselement
- 50: Mischeinheit
- 52: zweite Welle
- 54: zweites Kupplungselement
- 56: Mischkörper
- 58: Zylinder
- 60: Bedienhebel
- 80: Mischgehäuse
- 82: Mischraum
- 90: Pulvertrichter
- 92: Zulauf
- 94: Ablauf
- 100: Vorrichtung
- 112: Mischabschnitt
- 114: Abgabeabschnitt
- 116: Pulvertrichter
- 200: Verfahren zur Montage
- 202: Bereitstellen einer Antriebseinheit
- 204: Bereitstellen einer Mischeinheit
- 206: Verschließen der Antriebseinheit mit der Mischeinheit
- 300: Verfahren zur Herstellung
- 302: Herstellen einer Antriebseinheit
- 304: Herstellen einer Mischeinheit
- A: erste Position
- B: zweite Position
- C: dritte Position
- X: Achse

## Patentansprüche

1. Vorrichtung **(100)** zur Zubereitung eines, insbesondere proteinhaltigen, Mischgetränks, aufweisend:
eine Antriebseinheit **(10)** aufweisend eine von der Antriebseinheit **(10)** angetriebene erste Welle **(12),** die mit einem ersten Kupplungselement **(14)** drehfest verbunden ist;
eine Mischeinheit **(50)** aufweisend eine zweite Welle **(52),** ein zweites Kupplungselement **(54)** und einen Mischkörper **(56),** wobei ein erstes Ende der zweiten Welle **(52)** mit dem zweiten Kupplungselement **(54)** und ein zweites Ende der zweiten Welle **(52)** mit dem Mischkörper **(56)** drehfest verbunden ist;
ein Mischgehäuse **(80),** aufweisend einen Mischraum **(82),** wobei der Mischraum **(82)** dafür vorgesehen ist, wenigstens ein erstes, vorzugsweise rieselfähiges Substrat und ein wenigstens ein zweites, vorzugsweise im Wesentlichen flüssiges Substrat aufzunehmen, wobei der Mischkörper **(56)** durch eine Öffnung des Mischgehäuses **(80)** in den Mischraum **(82)** hineinragt, um dort durch Rotation das erste Substrat und das zweite Substrat zu vermischen;
wobei die Antriebseinheit **(10)** und die Mischeinheit **(50)** in einer ersten Relativposition zueinander anordenbar sind, in der das erste Kupplungselement **(14)** und das zweite Kupplungselement **(54)** getrennt sind, und
wobei die Antriebseinheit **(10)** und die Mischeinheit **(50)** in einer zweiten Relativposition zueinander anordenbar sind, in der das erste Kupplungselement **(14)** und das zweite Kupplungselement **(54)** derart in Wirkverbindung stehen, dass Rotationsenergie von dem ersten Kupplungselement **(14)** der ersten Welle **(12)** auf die zweite Welle **(52)** übertragbar ist.

2. Vorrichtung **(100)** nach Anspruch 1, wobei die Vorrichtung **(100)** eine Verschlusseinrichtung **(20)** aufweist und die Antriebseinheit **(10)** einen Antriebsgehäuseabschnitt **(16)** aufweist, in den die erste Welle **(12)** hineinragt und in dem das erste Kupplungselement **(14)** angeordnet ist, wobei die Verschlusseinrichtung dazu eingerichtet ist, in der zweiten Relativposition eine Öffnung des Antriebsgehäuseabschnitts, die in der ersten Relativposition geöffnet ist, zu verschließen.

3. Vorrichtung **(100)** nach Anspruch 2, wobei die Verschlusseinrichtung **(20)** aufweist:
ein erstes Verschlusselement **(22),** insbesondere ein Drehverschlusselement, mit dem die zweite Welle **(52)** drehbar, insbesondere lösbar, verbunden ist, und
ein zweites Verschlusselement **(24),** welches mit dem Antriebsgehäuseabschnitt **(16)** verbunden ist,
wobei das erste Verschlusselement **(22)** und das zweite Verschlusselement **(24)** dafür vorgesehen sind, die Öffnung des Antriebsgehäuseabschnitts **(16)** in der zweiten Relativposition mit der Mischeinheit **(50)** zu verschließen, insbesondere lösbar zu verbinden.

4. Vorrichtung **(100)** nach einem der vorhergehenden Ansprüche, wobei der Mischkörper **(56)** ein Mixerrad ist.

5. Vorrichtung **(100)** nach Anspruch 3,
wobei das erste Verschlusselement **(22)** in eine erste Position **(A)** und eine zweite Position **(B)** relativ zu dem zweiten Verschlusselement (24) durch eine Drehbewegung um eine durch die zweite Welle **(52)** definierte Achse **(X)** drehbar ist, wobei die erste Position **(A)** und die zweite Position **(B)** voneinander verschieden sind,
wobei die erste Position **(A)** eine Mischeinheit-Montage-Position ist, in der die Mischeinheit **(50)** relativ zu der Antriebseinheit **(10)** in axialer Richtung der Achse **(X)** bewegbar ist,
wobei die zweite Position **(B)** eine Betriebsposition ist, in der eine Bewegung der Mischeinheit **(50)** in axialer Richtung der Achse **(X)** blockiert ist und das erste Verschlusselement **(22)** mit dem zweiten Verschlusselement **(24)** in Eingriff steht, und insbesondere das erste Verschlusselement **(22)** an dem zweiten Verschlusselement **(24)** einrastet,
insbesondere derart, dass das erste Verschlusselement **(22)** und das zweite Verschlusselement **(24)** zusammen als Bajonettverschluss wirken.

6. Vorrichtung **(100)** nach einem der vorhergehenden Ansprüche, wobei die Mischeinheit **(50)** dazu eingerichtet ist, die Öffnung des Mischgehäuses **(80)** zu verschließen, wobei das Mischgehäuse **(80)** relativ zu der Mischeinheit **(50)** in einer ersten Mischgehäuseposition, in der die Öffnung des Mischgehäuses **(80)** verschlossen ist, und in einer zweiten Mischgehäuseposition, in der die Öffnung des Mischgehäuses geöffnet ist, anordenbar ist.

7. Vorrichtung **(100)** nach einem der vorhergehenden Ansprüche, wobei das erste Verschlusselement **(22)** und das zweite Verschlusselement **(24)** jeweils mindestens eine, insbesondere zumindest teilweise identische, Aussparung aufweisen, und wobei das Mischgehäuse **(80)** ein drittes Verschlusselement **(26),** insbesondere mindestens einen Vorsprung, aufweist, wobei in der zweiten Position **(B)** das dritte Verschlusselement **(26)** mit den jeweiligen Aussparungen derart in Eingriff steht, dass eine Rotation des Mischgehäuses **(80)** um die Achse **(X)** blockiert ist.

8. Vorrichtung **(100),** nach Anspruch 5, wobei das erste Verschlusselement **(22)** in eine dritte Position **(C)** relativ zu dem zweiten Verschlusselement **(24)** durch eine Drehbewegung um die Achse **(X)** bewegbar ist, wobei die dritte Position **(C),** die erste Position **(A)** und die zweite Position **(B)** voneinander verschieden sind,
wobei die dritte Position **(C)** eine Mischgehäuse-Montage-Position ist, in der das Mischgehäuse **(80)** relativ zu der Mischeinheit **(50)** in axialer Richtung der Achse **(X)** bewegbar ist, und das erste Verschlusselement **(22)** mit dem zweiten Verschlusselement **(24)** in Eingriff steht, und insbesondere das erste Verschlusselement **(22)** an dem zweiten Verschlusselement **(24)** einrastet,
und wobei in der zweiten Position **(B)** das dritte Verschlusselement **(26)** mit dem zweiten Verschlusselement **(24)** in Eingriff steht, und eine Bewegung des Mischgehäuses **(80)** von der Antriebsaufnahme **(16)** in axialer Richtung der Achse **(X)** blockiert ist,
insbesondere derart, dass das dritte Verschlusselement **(26)** und das zweite Verschlusselement **(24)** zusammen als Bajonettverschluss wirken.

9. Vorrichtung **(100)** nach einem der vorhergehenden Ansprüche, wobei das erste Kupplungselement **(14)** und das zweite Kupplungselement **(54)** als formschlüssige Kupplung, insbesondere als Klauenkupplung, vorgesehen ist.

10. Vorrichtung **(100)** nach einem der Ansprüche 1 bis 7, wobei das erste Kupplungselement **(14)** und das zweite Kupplungselement **(54)** als reibschlüssige Kupplung, insbesondere als Kegelkupplung, vorgesehen ist.

11. Vorrichtung **(100)** nach einem der vorhergehenden Ansprüche, wobei das zweite Kupplungselement **(54)** drehbar in dem Antriebsgehäuseabschnitt **(16)** gelagert ist.

12. Vorrichtung **(100)** nach einem der vorhergehenden Ansprüche, wobei die Vorrichtung ferner einen Pulvertrichter **(90)** aufweist, wobei der Pulvertrichter **(90)** dafür vorgesehen ist, mit dem ersten Substrat befüllbar zu sein.

13. Verfahren **(200)** zur Montage einer Vorrichtung zur Zubereitung eines, insbesondere proteinhaltigen, Mischgetränks, und insbesondere zur Durchführung in einer Vorrichtung **(100)** nach einem der Ansprüche 1 bis 12, aufweisend die folgenden Schritte:
(a) Bereitstellen **(202)** einer Antriebseinheit **(10)** aufweisend eine von der Antriebseinheit **(10)** angetriebene erste Welle **(12),** die mit einem ersten Kupplungselement **(14)** drehfest verbunden ist;
(b) Bereitstellen **(204)** einer Mischeinheit **(50)** aufweisend eine zweite Welle **(52),** ein zweites Kupplungselement **(54)** und einen Mischkörper **(56),** wobei ein erstes Ende der zweiten Welle **(52)** mit dem zweiten Kupplungselement **(54)** und ein zweites Ende der zweiten Welle **(52)** mit dem Mischkörper **(56)** drehfest verbunden ist, und
eines Mischgehäuses **(80),** aufweisend einen Mischraum **(82),** wobei der Mischraum **(82)** dafür vorgesehen ist, ein erstes, vorzugsweise rieselfähiges Substrat und wenigstens ein zweites, im Wesentlichen flüssige Substrat aufzunehmen, wobei der Mischkörper **(56)** durch eine Öffnung des Mischgehäuses **(80)** in den Mischraum **(82)** hineinragt, um dort durch Rotation das erste Substrat und das zweite Substrat zu vermischen;
(c) Versehen, insbesondere Verbinden, **(206)** der Antriebseinheit **(10)** mit der Mischeinheit **(50),**
wobei die Antriebseinheit **(10)** und die Mischeinheit **(50)** in einer ersten Relativposition zueinander anordenbar sind, in der das erste Kupplungselement **(14)** und das zweite Kupplungselement **(54)** getrennt sind, und
wobei die Antriebseinheit **(10)** und die Mischeinheit **(50)** in einer zweiten Relativposition zueinander anordenbar sind, in der das erste Kupplungselement **(14)** und das zweite Kupplungselement **(54)** derart in Wirkverbindung stehen, dass Rotationsenergie von dem ersten Kupplungselement **(14)** der ersten Welle **(12)** auf die zweite Welle **(52)** übertragbar ist.

14. Verfahren **(300)** zur Herstellung einer Vorrichtung zur Zubereitung eines, insbesondere proteinhaltigen, Mischgetränks, und insbesondere zur Herstellung einer Vorrichtung **(100)** nach einem der Ansprüche 1 bis 12 aufweisend die folgenden Schritte:
(a) Herstellen **(302)** einer Antriebseinheit **(10)** aufweisend eine von der Antriebseinheit **(10)** angetriebene erste Welle **(12),** die mit einem ersten Kupplungselement **(14)** drehfest verbunden ist;
(b) Herstellen **(304)** einer Mischeinheit **(50)** aufweisend eine zweite Welle **(52),** ein zweites Kupplungselement **(54)** und einen Mischkörper **(56),** wobei ein erstes Ende der zweiten Welle **(52)** mit dem zweiten Kupplungselement **(54)** und ein zweites Ende der zweiten Welle **(52)** mit dem Mischkörper **(56)** drehfest verbunden ist
wobei die Antriebseinheit **(10)** und die Mischeinheit **(50)** in einer ersten Relativposition zueinander anordenbar sind, in der das erste Kupplungselement **(14)** und das zweite Kupplungselement **(54)** getrennt sind, und
wobei die Antriebseinheit **(10)** und die Mischeinheit **(50)** in einer zweiten Relativposition zueinander anordenbar sind, in der das erste Kupplungselement **(14)** und das zweite Kupplungselement **(54)** derart in Wirkverbindung stehen, dass Rotationsenergie von dem ersten Kupplungselement **(14)** der ersten Welle **(12)** auf die zweite Welle **(52)** übertragbar ist.

15. Verwendung einer Vorrichtung **(100)** nach einem der Ansprüche 1 bis 12, welche nach einem Verfahren **(200)** nach Anspruch 13 montiert ist und nach einem Verfahren **(300)** nach Anspruch 14 hergestellt ist, bei der Zubereitung eines, insbesondere proteinhaltigen, Mischgetränks.
